# EUROPÄISCHE PATENTSCHRIFT

(11) **EP 3 697 966 B1**
(45) Veröffentlichungstag und Bekanntmachung des Hinweises auf die Patenterteilung: **19.10.2022**
(21) Anmeldenummer: 19734030.0
(22) Anmeldetag: 24.06.2019
(51) Int. Cl.: E01C 19/26, E01C 19/23, E01C 19/28, B62D 12/00, B62D 53/02, E02D 3/026, A01B 29/06, E02F 9/00, E02F 9/08

(54) **KNICK/PENDEL-GELENK ZUR GELENKIGEN VERBINDUNG EINES HINTERWAGENS MIT EINEM VORDERWAGEN EINER BAUMASCHINE**
ARTICULATED/SWIVEL JOINT FOR THE ARTICULATED CONNECTION BETWEEN A REAR SECTION AND A FRONT SECTION OF A CONSTRUCTION MACHINE
ARTICULATION À BOUCLIER POUR LA LIAISON ARTICULÉE D'UN ARRIÈRE-TRAIN À UN AVANT-TRAIN D'UNE MACHINE DE CONSTRUCTION

(30) Priorität: 04.07.2018 DE 102018116194
(43) Veröffentlichungstag der Anmeldung: 26.08.2020
(73) Patentinhaber: Hamm AG, 95643 Tirschenreuth (DE)
(72) Erfinder: KÖSTLER, Gerd, 95643 Tirschenreuth (DE); REBER, Stefan, 92637 Weiden (DE)
(74) Vertreter: Ruttensperger Lachnit Trossin Gomoll
(86) Internationale Anmeldenummer: PCT/EP2019/066644
(87) Internationale Veröffentlichungsnummer: WO 2020/007632

(56) Entgegenhaltungen:
- EP-A1- 2 872 379
- DE-A1- 10 158 912
- DE-A1-102010 014 811

## Beschreibung

Die vorliegende Erfindung betrifft ein Knick/Pendel-Gelenk zur gelenkigen Verbindung eines Hinterwagens mit einem Vorderwagen einer Baumaschine, insbesondere Bodenverdichter, umfassend einen an einem Hinterwagen einer Baumaschine anzubringenden hinteren Gelenkteil, einen an einem Vorderwagen einer Baumaschine anzubringenden vorderen Gelenkteil sowie einen den hinteren Gelenkteil mit dem vorderen Gelenkteil gelenkig koppelnden Gelenkmechanismus, wobei der Gelenkmechanismus den hinteren Gelenkteil und den vorderen Gelenkteil zur Durchführung einer einer Lenkbewegung zwischen Hinterwagen und Vorderwagen entsprechenden Knickbewegung und einer einer Torsionsbewegung zwischen Hinterwagen und Vorderwagen entsprechenden Pendelbewegung koppelt, wobei dem Gelenkmechanismus eine Pendelanschlaganordnung zur Begrenzung der Pendelbewegung des vorderen Gelenksteils bezüglich des hinteren Gelenksteils zugeordnet ist, wobei die Pendelanschlaganordnung einen ersten Pendelanschlag umfasst zum Vorgeben einer ersten maximalen Pendelauslenkung bei Auslenkung des vorderen Gelenkteils bezüglich des hinteren Gelenksteils in einer ersten Pendelbewegungsrichtung und einen zweiten Pendelanschlag umfasst zum Vorgeben einer zweiten maximalen Pendelauslenkung bei Auslenkung des vorderen Gelenkteils bezüglich des hinteren Gelenksteils in einer der ersten Pendelbewegungsrichtung entgegengesetzten zweiten Pendelbewegungsrichtung, wobei die erste maximale Pendelauslenkung und die zweite maximale Pendelauslenkung einen maximalen Pendelauslenkungsbereich für die Pendelbewegung des vorderen Gelenkteils bezüglich des hinteren Gelenkteils definieren.

Ein Knick/Pendel-Gelenk zur gelenkigen Verbindung des Hinterwagens einer als Bodenverdichter ausgebildeten Baumaschine mit einem eine Verdichterwalze aufweisenden Vorderwagen ist aus der EP 1 111 134 A2 bekannt. Dieses Knick/Pendel-Gelenk weist einen im Wesentlichen plattenartig ausgebildeten und am Hinterwagen des Bodenverdichters anzubringenden hinteren Gelenkteil und einen ebenfalls im Wesentlichen plattenartig ausgebildeten und am Vorderwagen des Bodenverdichters anzubringenden vorderen Gelenkteil auf. Die beiden Gelenkteile liegen einander mit Abstand in einer Abstandsrichtung gegenüber und sind orthogonal zu dieser Abstandsrichtung, also im Wesentlichen in einer Höhenrichtung des Bodenverdichters, im oberen Bereich derselben durch ein Kopplungsteil gelenkig miteinander verbunden. Das Kopplungsteil ist im Bereich einer als Kugelgelenk ausgebildeten ersten Gelenkeinheit mit dem hinteren Gelenkteil gelenkig verbunden und ist im Bereich einer ebenfalls als Kugelgelenk ausgebildeten zweiten Gelenkeinheit mit dem vorderen Gelenkteil verbunden und erstreckt sich somit im Wesentlichen in horizontaler Richtung näherungsweise in einer Längsrichtung des Bodenverdichters. Orthogonal zur Abstandsrichtung, also in einer Höhenrichtung unter dem Kopplungsteil ist am hinteren Gelenkteil ein hinterer Gelenkträger vorgesehen, der auf den vorderen Gelenkteil sich zu erstreckt. Entsprechend ist am vorderen Gelenkteil ein sich auf den hinteren Gelenkteil zu erstreckender vorderer Gelenkträger vorgesehen. Diese beiden Gelenkträger sind über eine als Kugelgelenk ausgebildete dritte Gelenkeinheit gelenkig miteinander verbunden.

Mit dieser Art eines Knick/Pendel-Gelenks wird in kinematisch vorteilhafter Weise eine derartige Verbindung zwischen Hinterwagen und Vorderwagen geschaffen, dass zum Lenken des Bodenverdichters die beiden Gelenkteile eine Knickbewegung bezüglich einander ausführen können, wobei diese Knickbewegung näherungsweise zu einer Verschwenkung zwischen Vorderwagen und Hinterwagen bzw. vorderem Gelenkteil und hinterem Gelenkteil um eine bei Durchführung einer Knickbewegung im Raum bzw. bezüglich dem Hinterwagen nicht feststehende, grundsätzlich aber näherungsweise vertikal verlaufende Lenkachse entspricht. Um Unebenheiten im Boden ausgleichen zu können und damit zu vermeiden, dass die am Vorderwagen vorgesehene Verdichterwalze quer zur Längsrichtung des Bodenverdichters mit unterschiedlicher Belastung auf dem zu verdichtenden Untergrund aufliegt, ermöglicht dieses bekannte Knick/Pendel-Gelenk ferner eine Pendelbewegung zwischen Vorderwagen und Hinterwagen, welche näherungsweise einer Verschwenkung des Vorderwagens bezüglich des Hinterwagens um eine in der Längsrichtung des Bodenverdichters verlaufende Längsachse entspricht, welche bei Durchführung der Pendelbewegung ebenfalls im Raum bzw. bezüglich dem Hinterwagen nicht feststehend ist. Diese Pendelbewegung führt zu einer Torsion des Bodenverdichters in sich, so dass Vorderwagen und Hinterwagen sich voneinander im Wesentlichen unabhängig jeweils an die Geometrie des Untergrunds anpassen können.

Ein Knick/Pendel-Gelenk gemäß dem Oberbegriff des Anspruchs 1 mit anderer konstruktiver Ausgestaltung und dementsprechend auch anderer Kinematik ist aus der EP 2 872 379 B1 bekannt. Bei diesem bekannten Knick/Pendel-Gelenk sind ein am Hinterwagen eines Bodenverdichters vorgesehener hinterer Gelenkteil und ein am Vorderwagen des Bodenverdichters vorgesehener vorderer Gelenkteil um eine bezüglich einer Vertikalrichtung geneigte und bezüglich des Hinterwagens feststehende Knickachse verschwenkbar. Der vordere Gelenkteil umfasst einen mit dem hinteren Gelenkteil um die Knickachse schwenkbar verbundenen ersten Gelenkteilabschnitt und einen am Vorderwagen festgelegten zweiten Gelenkteilabschnitt, der um eine im Wesentlichen horizontal verlaufende und somit bezüglich des Knickachse unter einem von 90° sich unterscheidenden Winkel angeordnete Pendelachse bezüglich des ersten Gelenkteilabschnitts verschwenkbar ist. An dem mit dem hinteren Gelenkteil um die Knickachse schwenkbar gekoppelten ersten Gelenkteilabschnitt sind zwei Schwenkanschläge vorgesehen, welche mit zwei am zweiten Gelenkteilabschnitt des vorderen Gelenkteils vorgesehenen GegenAnschlägen zur Bereitstellung jeweiliger Pendelanschläge zusammenwirken. Befinden sich die beiden Gelenkteilabschnitte des vorderen Gelenkteils in einer Pendel-Neutrallage bezüglich einander, in welcher der Vorderwagen und der Hinterwagen des Bodenverdichters bezüglich einander nicht tordiert sind, sind die jeweils einander zugeordneten Anschläge und Gegen-Anschläge mit gleichem Abstand zueinander angeordnet, so dass, ausgehend von der Pendel-Neutrallage, die beiden Gelenkteilabschnitte des vorderen Gelenkteils in jeder Pendelbewegungsrichtung im gleichen Ausmaß bezüglich einander verschwenken können, bis bei Erreichen einer jeweiligen maximalen Pendelauslenkung ein jeweiliger Anschlag mit dem zugeordneten Gegen-Anschlag in Kontakt tritt und eine weitere Pendelbewegung nicht zulässt.

Aufgrund der Schrägstellung der Knickachse bezüglich der Vertikalrichtung führt auch bei vollkommen ebenem Untergrund, welcher grundsätzlich eine Pendelbewegung zwischen Vorderwagen und Hinterwagen nicht erforderlich macht, das Knicken des Vorderwagen bezüglich des Hinterwagens, also das Durchführen einer Lenkbewegung, ausgehend von einer Neutral-Knicklage, welche einer Geradeausfahrt des Bodenverdichters entspricht, die Knickbewegung zwischen vorderem und hinterem Gelenkteil zwangsweise zu einer Verschwenkung zwischen dem ersten Gelenkteilabschnitt und dem zweiten Gelenkteilabschnitt des vorderen Gelenkteils, um zu gewährleisten, dass die Verdichterwalze über ihre gesamte Breite gleichmäßig auf dem Untergrund aufsteht. Dabei nähert sich ein Paar von Anschlag und Gegen-Anschlag einander an, während das andere Paar von Anschlag und Gegen-Anschlag sich voneinander entfernt. Da aufgrund dieser bei Durchführung einer Knickbewegung bzw. Lenkbewegung zwangsweise hervorgerufenen Verdrehung zwischen dem ersten Gelenkteilabschnitt und dem zweiten Gelenkteilabschnitt des vorderen Gelenkteils bereits ein Teil des bis zum Erreichen der maximalen Pendelauslenkung in dieser Pendelbewegungsrichtung zur Verfügung stehenden Schwenkwegs aufgebraucht ist, steht für eine weitere, beispielsweise durch den Untergrund hervorgerufene Pendelbewegung in dieser Pendelbewegungsrichtung nur noch eine verringerte Rest-Pendelauslenkung zur Verfügung, während für eine Pendelbewegung in der entgegengesetzten Pendelbewegungsrichtung eine im gleichen Ausmaß erhöhte Rest-Pendelauslenkung zur Verfügung steht. Der zwischen den beiden maximalen Pendelauslenkungen bereitgestellte und durch diese definierte Pendelauslenkungsbereich bleibt jedoch unverändert.

Es ist die Aufgabe der vorliegenden Erfindung, ein Knick/Pendel-Gelenk zur gelenkigen Verbindung eines Hinterwagens mit einem Vorderwagen einer Baumaschine, insbesondere Bodenverdichter, vorzusehen, mit welchem eine erhöhte Sicherheit gegen eine übermäßige Pendelbewegung der beiden Gelenkteile bezüglich einander erreicht wird.

Erfindungsgemäß wird diese Aufgabe gelöst durch ein Knick/Pendel-Gelenk zur gelenkigen Verbindung eines Hinterwagens mit einem Vorderwagen einer Baumaschine, insbesondere Bodenverdichter, umfassend einen an einem Hinterwagen einer Baumaschine anzubringenden hinteren Gelenkteil, einen an einem Vorderwagen einer Baumaschine anzubringenden vorderen Gelenkteil sowie einen den hinteren Gelenkteil mit dem vorderen Gelenkteil gelenkig koppelnden Gelenkmechanismus, wobei der Gelenkmechanismus den hinteren Gelenkteil und den vorderen Gelenkteil zur Durchführung einer einer Lenkbewegung zwischen Hinterwagen und Vorderwagen entsprechenden Knickbewegung und einer einer Torsionsbewegung zwischen Hinterwagen und Vorderwagen entsprechenden Pendelbewegung koppelt, wobei dem Gelenkmechanismus eine Pendelanschlaganordnung zur Begrenzung der Pendelbewegung des vorderen Gelenksteils bezüglich des hinteren Gelenksteils zugeordnet ist, wobei die Pendelanschlaganordnung einen ersten Pendelanschlag umfasst zum Vorgeben einer ersten maximalen Pendelauslenkung bei Auslenkung des vorderen Gelenkteils bezüglich des hinteren Gelenksteils in einer ersten Pendelbewegungsrichtung und einen zweiten Pendelanschlag umfasst zum Vorgeben einer zweiten maximalen Pendelauslenkung bei Auslenkung des vorderen Gelenkteils bezüglich des hinteren Gelenksteils in einer der ersten Pendelbewegungsrichtung entgegengesetzten zweiten Pendelbewegungsrichtung, wobei die erste maximale Pendelauslenkung und die zweite maximale Pendelauslenkung einen maximalen Pendelauslenkungsbereich für die Pendelbewegung des vorderen Gelenkteils bezüglich des hinteren Gelenkteils definieren.

Dabei ist weiter vorgesehen, dass bei Durchführung einer Knickbewegung mit zunehmender Knickauslenkung ausgehend von einer Knick-Neutrallage des vorderen Gelenksteils bezüglich des hinteren Gelenkteils der maximale Pendelauslenkungsbereich abnimmt.

In Abkehr von dem aus der EP 2 872 379 B1 bekannten Aufbau eines Knick/Pendel-Gelenks nimmt bei dem erfindungsgemäßen Aufbau bei Durchführung einer Knickbewegung, also beispielsweise einer Lenkbewegung einer Baumaschine, nicht bzw. nicht nur die bis zum Erreichen einer maximalen Pendelauslenkung noch zur Verfügung stehende Rest-Pendelauslenkung aufgrund einer durch eine Knickbewegung zwangsweise induzierten Pendelbewegung ab, sondern es nimmt der maximale Pendelauslenkungsbereich, also der Pendelweg zwischen den beiden maximalen Pendelauslenkungen ab. Dies erhöht die Sicherheit, dass mit den beiden Gelenkteilen gekoppelte Systembereiche, also beispielsweise ein Hinterwagen und ein Vorderwagen einer Baumaschine, bei Durchführung einer Knickbewegung bzw. Lenkbewegung und dabei zusätzlich auch auftretender Pendelbewegung nicht miteinander in Kontakt treten und dadurch möglicherweise Beschädigungen hervorgerufen werden.

Bei einer für einen gleichmäßigen Bewegungsablauf besonders vorteilhaften Ausgestaltung wird vorgeschlagen, dass bei Durchführung der Knickbewegung mit zunehmender Knickauslenkung ausgehend von der Knick-Neutrallage der maximale Pendelauslenkungsbereich stetig abnimmt. Dies bedeutet, dass, ausgehend von der Knick-Neutrallage, also einer Lage der beiden Gelenkteile bezüglich einander, welche diese beispielsweise bei Geradeausfahrt einer mit einem erfindungsgemäßen Knick/Pendel-Gelenk ausgestalteten Baumaschine bezüglich einander einnehmen, kein Bereich der Knickbewegung vorhanden ist, in welchem der maximale Pendelauslenkungsbereich bei Bewegung in Richtung zunehmender Knickauslenkung nicht abnimmt.

Da bei Positionierung in der Knick-Neutrallage, also beispielsweise bei geradeaus sich bewegender Baumaschine, die Gefahr einer übermäßig starken und möglicherweise zu Beschädigungen führenden Pendelbewegung vergleichsweise gering ist, wird vorgeschlagen, dass bei in der Knick-Neutrallage bezüglich einander positioniertem vorderem Gelenkteil und hinterem Gelenkteil die erste maximale Pendelauslenkung oder/und die zweite maximale Pendelauslenkung ausgehend von einer Pendel-Neutrallage im Bereich von 8° bis 15°, vorzugsweise bei etwa 11,7°, liegt, oder/und dass bei in der Knick-Neutrallage bezüglich einander positioniertem vorderem Gelenkteil und hinterem Gelenkteil der maximale Pendelauslenkungsbereich in einem Bereich von 20° bis 27°, vorzugsweise bei etwa 23,4°, liegt.

Liegt eine vergleichsweise große Knickauslenkung vor, welche einem vergleichsweise großen Lenkwinkel einer Baumaschine entspricht, wird erfindungsgemäß dann zum Vermeiden einer übermäßig starken Pendelauslenkung vorgeschlagen, dass bei in einer einem Lenkwinkel von 30° entsprechenden Knickauslenkung des vorderen Gelenksteils bezüglich des hinteren Gelenkteils positioniertem vorderem Gelenkteil und hinterem Gelenkteil die erste maximale Pendelauslenkung oder/und die zweite maximale Pendelauslenkung ausgehend von einer Pendel-Neutrallage des vorderen Gelenksteils bezüglich des hinteren Gelenksteils im Bereich von 4° bis 11°, vorzugsweise bei etwa 7,6°, liegt, oder/und dass bei in einer einem Lenkwinkel von 30° entsprechenden Knickauslenkung des vorderen Gelenksteils bezüglich des hinteren Gelenkteils positioniertem vorderem Gelenkteil und hinterem Gelenkteil der maximale Pendelauslenkungsbereich in einem Bereich von 12° bis 19°, vorzugsweise bei etwa 15,2°, liegt.

Bei einem für die Lenk- bzw. Pendelkinematik besonders vorteilhaften Aufbau kann der Gelenkmechanismus umfassen:
- ein im Bereich einer ersten Gelenkeinheit mit dem hinteren Gelenkteil und im Bereich einer zweiten Gelenkeinheit mit dem vorderen Gelenkteil gelenkig verbundenes Kopplungsteil,
- einen vom hinteren Gelenkteil auf das vordere Gelenkteil sich zu erstreckenden hinteren Gelenkträger, einen von dem vorderen Gelenkteil auf das hinteren Gelenkteil sich zu erstreckenden vorderen Gelenkträger sowie eine in einer Abstandsrichtung des vorderen Gelenkteils bezüglich des hinteren Gelenkteils den hinteren Gelenkträger zwischen der ersten Gelenkeinheit und der zweiten Gelenkeinheit und orthogonal zur Abstandsrichtung in Abstand zur ersten Gelenkeinheit und zur zweiten Gelenkeinheit gelenkig mit dem vorderen Gelenkträger koppelnde dritte Gelenkeinheit.

Bei dem Aufbau des Knick/Pendel-Gelenks mit den drei vorangehend angegebenen Gelenkeinheiten wird insbesondere bei überlagerter Knickbewegung und Pendelbewegung eine derartige Kinematik erzeugt, dass in keiner der Gelenkeinheiten ausschließlich eine Verschwenkung um eine im Raum bzw. beispielsweise bezüglich des Hinterwagen feststehende Schwenkachse auftritt. Um dem Rechnung zu tragen, wird vorgeschlagen, dass die erste Gelenkeinheit oder/und die zweite Gelenkeinheit oder/und die dritte Gelenkeinheit nach Art eines Kugelgelenks ausgebildet ist. Dies bedeutet, dass jede derart ausgebildete Gelenkeinheit dazu in der Lage ist, eine Verschwenkbewegung der beiden dadurch gekoppelten Bauteile bzw. Baugruppen um mehr als eine Raumachse zuzulassen. Beispielsweise kann eine derartige Gelenkeinheit als Kugelgelenk mit Gelenkkugel und diese aufnehmender Gelenkpfanne ausgebildet sein. Eine derartige Funktionalität nach Art eines Kugelgelenks kann beispielsweise auch durch ein Kardangelenk bereitgestellt werden.

Um in baulich einfacher, gleichwohl jedoch zuverlässig wirkender Art und Weise die erfindungsgemäße Funktionalität zum Begrenzen der Pendelbewegung mit abnehmendem maximalem Pendelauslenkungsbereich bereitstellen zu können, wird vorgeschlagen, dass die Pendelanschlagformation umfasst:
- an einem Gelenkteil von vorderem Gelenkteil und hinterem Gelenkteil einen auf das andere Gelenkteil von vorderem Gelenkteil und hinterem Gelenkteil sich zu erstreckende erste Pendelanschlagformation mit zwei voneinander abgewandt orientierten Pendelanschlagflächen,
- am anderen Gelenkteil eine auf das eine Gelenkteil sich zu erstreckende und die erste Pendelanschlagformation mit zwei Pendelanschlagfingern gabelartig umgreifende zweite Pendelanschlagformation,
wobei jeder Pendelanschlagfinger einer der Pendelanschlagflächen gegenüberliegt und mit dieser einen Pendelanschlag bereitstellt.

Die mit sich ändernder Knickauslenkung sich entsprechend ändernde bzw. anpassende Wechselwirkung zwischen den beiden Pendelanschlagformationen kann dadurch bereitgestellt werden, dass die erste Pendelanschlagformation einen in Richtung vom einen Gelenkteil sich weg erstreckenden Stegbereich und an einem vom einen Gelenkteil entfernten Endbereich des Stegbereichs einen bezüglich des Stegbereichs erweiterten Kopfbereich aufweist, wobei der Abstand der voneinander abgewandt orientierten Pendelanschlagflächen zueinander im Kopfbereich wenigstens bereichsweise größer ist, als im Stegbereich, wobei vorzugsweise wenigstens in einem Teil des Stegbereichs der Abstand der voneinander abgewandt orientierten Pendelanschlagflächen zueinander im Wesentlichen konstant ist oder sich in einer Stegbereichslängsrichtung mit im Wesentlichen konstanter Rate verändert.

Im Kopfbereich nimmt dann vorzugsweise der Abstand der voneinander abgewandt orientierten Pendelanschlagflächen zueinander ausgehend vom Stegbereich bis zu einem maximalen Abstand zu. Diese voneinander abgewandt orientierten Pendelanschlagflächen bilden somit jeweils Nockenflächen, welche mit den als diese Flächen abtastenden Nocken der zweiten Pendelanschlagformation zusammenwirken.

Ferner wird vorgeschlagen, dass zum Bereitstellen des abhängig von der Knickauslenkung sich ändernden maximalen Pendelbewegungsbereichs der gegenseitige Abstand der Pendelanschlagfinger in Richtung vom anderen Gelenkteil weg in einem ersten Erstreckungsbereich der Pendelanschlagfinger zunimmt und einem an den ersten Erstreckungsbereich anschließenden zweiten Erstreckungsbereich der Pendelanschlagfinger abnimmt.

Bei einer besonders vorteilhaften Ausgestaltung wirken die Pendelanschlagflächen mit ihren jeweils zugeordneten Pendelanschlagfingern derart zusammen, dass ausgehend von der Knick-Neutrallage mit zunehmender Knickauslenkung des vorderen Gelenksteils bezüglich des hinteren Gelenkteils jeder Pendelanschlagfinger der zweiten Pendelanschlagformation in einem dem einen Gelenkteil näherliegenden Bereich der zugeordneten Pendelanschlagfläche mit dieser Pendelanschlagfläche der ersten Pendelanschlagformation zum Bereitstellen eines jeweiligen Pendelanschlags zusammenwirkt, oder/und dass ausgehend von der Knick-Neutrallage mit zunehmender Knickauslenkung des vorderen Gelenksteils bezüglich des hinteren Gelenkteils jeder Pendelanschlagfinger der zweiten Pendelanschlagformation mit einem dem anderen Gelenkteil näherliegenden Bereich des jeweiligen Pendelanschlagfingers mit der zugeordneten Pendelanschlagfläche der ersten Pendelanschlagformation zum Bereitstellen eine jeweiligen Pendelanschlags zusammenwirkt.

Insbesondere kann vorgesehen sein, dass in der Knick-Neutrallage jeder Pendelanschlagfinger der zweiten Pendelanschlagformation im Bereich seines ersten Erstreckungsbereichs mit der zugeordneten Pendelanschlagfläche im Bereich des Kopfbereichs der ersten Pendelanschlagformation zum Bereitstellen eines jeweiligen Pendelanschlags zusammenwirkt, oder/und dass in einer einem Lenkwinkel von 30° entsprechenden Knickauslenkung des vorderen Gelenkteils bezüglich des hinteren Gelenkteils jeder Pendelanschlagfinger der zweiten Pendelanschlagformation im Bereich seines zweiten Erstreckungsbereichs mit der zugeordneten Pendelanschlagfläche im Bereich des Stegbereichs der ersten Pendelanschlagformation zum Bereitstellen eines jeweiligen Pendelanschlags zusammenwirkt.

Bei dem erfindungsgemäßen Aufbau eines Knick/Pendel-Gelenks kann das eine Gelenkteil das vordere Gelenkteil und das andere Gelenkteil das hintere Gelenkteil sein.

Ferner wird für eine zuverlässige Zusammenwirkung der beiden Pendelanschlagformationen bei Ausgestaltung des Knick/Pendel-Gelenks mit den drei vorangehend erläuterten Gelenkeinheiten vorgeschlagen, dass das eine Gelenkteil das vordere Gelenkteil und das andere Gelenkteil das hintere Gelenkteil ist.

Die vorliegende Erfindung betrifft ferner eine Baumaschine, insbesondere Bodenverdichter, umfassend einen Hinterwagen und einen vermittels eines erfindungsgemäß aufgebauten Knick/Pendel-Gelenks mit dem Hinterwagen verbundenen Vorderwagen.

Dabei kann am Hinterwagen ein Fahrstand vorgesehen sein, der für eine in Längsrichtung kompakte Bauart derart positioniert sein kann, dass er in einer Baumaschinenlängsrichtung das Knick/Pendel-Gelenk wenigstens bereichsweise überlappt, somit beispielsweise im Wesentlichen über diesem Gelenk positioniert ist.

Am Vorderwagen der Baumaschine kann wenigstens ein Arbeitsgerät, wie z. B. eine Verdichterwalze vorgesehen sein. Für den Vortrieb kann ein am Hinterwagen vorgesehenes Antriebsaggregat, beispielsweise eine Diesel-Brennkraftmaschine, vorgesehen sein. Es ist darauf hinzuweisen, dass die Prinzipien der vorliegenden Erfindung auch bei anderen Baumaschinen als Bodenverdichtern, beispielsweise Radladern oder dergleichen, zum Einsatz kommen können.

Die vorliegende Erfindung wird nachfolgend mit Bezug auf die beiliegenden Figuren detailliert beschrieben. Es zeigt:
- Fig. 1: eine Seitenansicht einer als Bodenverdichter ausgeführten Baumaschine;
- Fig. 2: eine perspektivische Ansicht eines Knick/Pendel-Gelenks der Baumaschine der Fig. 1;
- Fig. 3: eine Draufsicht auf das Knick/Pendel-Gelenk der Fig. 2 in einer Neutrallage eines vorderen Gelenkteils und eines hinteren Gelenkteils bezüglich einander;
- Fig. 4: eine der Fig. 3 entsprechende Ansicht bei einer einem Lenkwinkel von 30° und einem Pendelwinkel von 0° entsprechenden Positionierung von vorderem und hinterem Gelenkteil bezüglich einander;
- Fig. 5: eine der Fig. 3 entsprechende Ansicht bei einer einem Lenkwinkel von 0° und einem Pendelwinkel von 11,7° entsprechenden Positionierung von vorderem und hinterem Gelenkteil bezüglich einander;
- Fig. 6: eine der Fig. 3 entsprechende Ansicht bei einer einem Lenkwinkel von 10° und einem Pendelwinkel von 10,8° entsprechenden Positionierung von vorderem und hinterem Gelenkteil bezüglich einander;
- Fig. 7: eine der Fig. 3 entsprechende Ansicht bei einer einem Lenkwinkel von 20° und einem Pendelwinkel von 9,3° entsprechenden Positionierung von vorderem und hinterem Gelenkteil bezüglich einander;
- Fig. 8: eine der Fig. 3 entsprechende Ansicht bei einer einem Lenkwinkel von 30° und einem Pendelwinkel von 7,6° entsprechenden Positionierung von vorderem und hinterem Gelenkteil bezüglich einander.

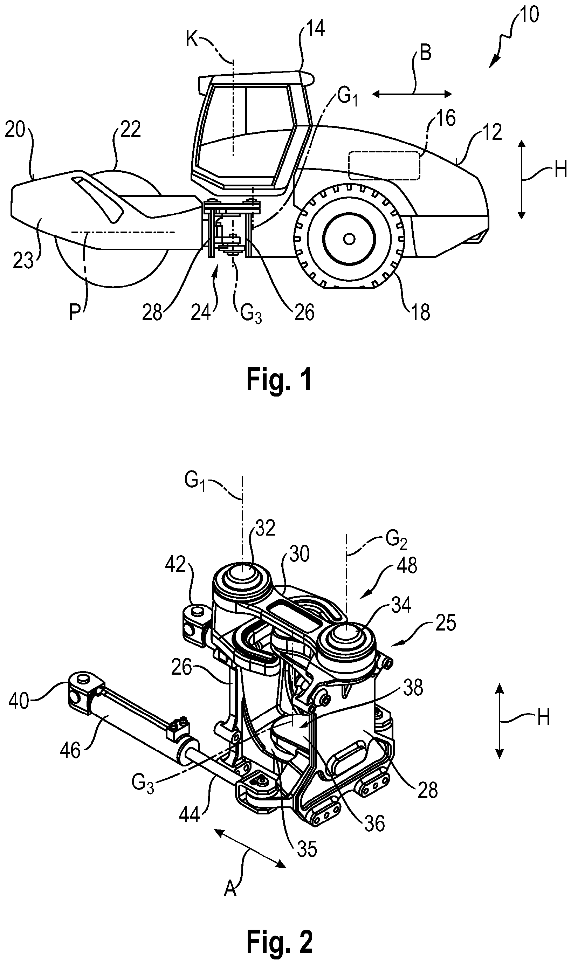

In Fig. 1 ist eine als Bodenverdichter ausgebildete Baumaschine allgemein mit 10 bezeichnet. Der Bodenverdichter bzw. die Baumaschine 10 umfasst einen Hinterwagen 12, an welchem ein Fahrstand 14 sowie ein Antriebsaggregat 16 vorgesehen sind. Durch das Antriebsaggregat 16, z.B. Dieselbrennkraftmaschine, können beidseits des Hinterwagens 12 vorgesehene Antriebsräder 18 zur Drehung angetrieben und damit die Baumaschine 10 im Wesentlichen in einer Baumaschinenlängsrichtung B voran bewegt werden.

Die Baumaschine 10 umfasst ferner einen Vorderwagen 20 mit einem einer am Vorderwagen 20 vorgesehene Verdichterwalze 22 umgebenden Rahmen 23. Der Verdichterwalze 22 kann ein darin angeordneter Oszillationsmechanismus zugeordnet sein, welcher diese mit einem periodischen Oszillationsdrehmoment in Umfangsrichtung um eine Drehachse der Verdichterwalze beaufschlagt, um der Abrollbewegung der Verdichterwalze 22 eine durch das Oszillationsdrehmoment hervorgerufene alternierende Oszillationsbewegung zu überlagern. Alternativ oder zusätzlich kann der Verdichterwalze 22 eine Vibrationsanordnung zugeordnet sein, durch welche diese periodisch in einer Höhenrichtung H der Baumaschine 10 beschleunigt wird, um der Abrollbewegung der Verdichterwalze 22 eine im Wesentlichen in der Höhenrichtung H überlagerte periodische Auf-Ab-Beschleunigung zu überlagern.

Durch ein nachfolgend detailliert beschriebenes Knick/Pendel-Gelenk 24 ist der Hinterwagen 12 mit dem Vorderwagen 20 verbunden. Das Knick/Pendel-Gelenk 24 gestattet ein Abknicken des Vorderwagens 20 bezüglich des Hinterwagens 12 näherungsweise um eine im Wesentlichen in der Höhenrichtung H verlaufende Knickachse K, um dadurch die Baumaschine 10 zu lenken. Ferner gestattet das Knick/Pendel-Gelenk 24 eine Bewegung des Vorderwagens 20 bezüglich des Hinterwagens 12 um eine näherungsweise in der Baumaschinenlängsrichtung B verlaufende und damit näherungsweise horizontal orientierte Pendelachse P. Es sei bereits hier darauf hingewiesen, dass aufgrund der speziellen Ausgestaltung des Knick/Pendel-Gelenks 24 die Knickachse K und die Pendelachse P nur näherungsweise veranschaulichen, um welche Achsen einerseits zum Lenken, andererseits zum Zulassen einer Torsion zwischen Vorderwagen 20 und Hinterwagen 12 Bewegungen stattfinden. Tatsächlich trifft diese Lage der Achsen K und P nur für den Zustand zu, in welchem Hinterwagen 12 und Vorderwagen 20 sich in einer Knick-Neutrallage bezüglich einander befinden, die Baumaschine 10 also geradeaus und ohne Lenkeinschlag fahren soll, und Hinterwagen 12 und Vorderwagen 20 mit den angetriebenen Rändern 18 einerseits bzw. der Verdichterwalze 22 andererseits auf einem exakt ebenen Untergrund stehen und somit Hinterwagen 12 und Vorderwagen 20 auch in einer Pendel-Neutrallage bezüglich einander sind, in welcher eine Verwindung, also Torsion, zwischen Hinterwagen 12 und Vorderwagen 20 nicht vorhanden ist. Sobald eine Auslenkung aus der Knick-Neutrallage bzw. der Pendel-Neutrallage auftritt, wird die jeweilige Achse sich im Raum und insbesondere auch bezüglich des Hinterwagens 12 und des Vorderwagens 20 verlagern.

Die Fig. 2 zeigt das Knick/Pendel-Gelenk 24 in perspektivischer Ansicht. Das Knick/Pendel-Gelenk 24 umfasst einen plattenartig ausgebildeten hinteren Gelenkteil 26, mit welchem das Knick/Pendel-Gelenk 24 an einen vorderen und unter dem Fahrstand 14 liegenden Bereich des Hinterwagens 12 beispielsweise durch Verschraubung festgelegt wird. Das Knick/Pendel-Gelenk 24 umfasst ferner einen beispielsweise plattenartig ausgebildeten vorderen Gelenkteil 28, der in einer Abstandsrichtung A dem hinteren Gelenkteil 26 gegenüberliegt. Bei in der Knick-Neutrallage und der Pendel-Neutrallage angeordnetem Hinterwagen 12 und Vorderwagen 20 entspricht diese Abstandsrichtung A beispielsweise der Baumaschinenlängsrichtung B.

In einem in der Höhenrichtung H, welche zur Abstandsrichtung A orthogonal orientiert ist, oberen Bereich sind der hintere Plattenteil 26 und der vordere Plattenteil 28 durch ein stab- oder stangenartiges Kopplungsteil 30 eines allgemein mit 25 bezeichneten Gelenkmechanismus miteinander gelenkig verbunden. Dazu ist das Kopplungsteil 30 im Bereich einer ersten Gelenkeinheit 32 gelenkig an den hinteren Gelenkteil 26 angekoppelt und ist im Bereich einer zweiten Gelenkeinheit 34 gelenkig an den vorderen Gelenkteil 28 angekoppelt. Jede der beiden Gelenkeinheiten 32, 34 ermöglicht eine Verschwenkung des Kopplungsteils 30 bezüglich des hinteren Gelenkteils 26 bzw. des vorderen Gelenkteils 28 um eine jeweilige Gelenkachse G₁ bzw. G₂, die in der Knick-Neutrallage und der Pendel-Neutrallage im Wesentlichen in Höhenrichtung orientiert verlaufen. Die Gelenkeinheiten 32, 34 gestatten jedoch auch eine Verschwenkung des Kopplungsteils 30 bezüglich der jeweiligen Gelenkteile 26, 28 um weitere Gelenkachsen, so dass nach Art eines Kugelgelenks das Kopplungsteil 30 zumindest in begrenzten Schwenkwinkelbereich in beliebiger Richtung bezüglich des jeweiligen Gelenkteils 26 bzw. 28 verschwenkt werden kann. Beispielsweise können die Gelenkeinheiten 32, 34 als Kugelgelenk mit einer am jeweiligen Gelenkteil 26 bzw. 28 vorgesehenen Gelenkkugel und einer am Kopplungsteil 30 vorgesehenen Gelenkpfanne ausgebildet sein.

Am hinteren Gelenkteil 26 ist ein sich in der Abstandsrichtung A auf das vordere Gelenkteil 28 zu erstreckender hinterer Gelenkträger 35 vorgesehen. Entsprechend ist am vorderen Gelenkteil 28 ein sich in Abstandsrichtung A über dem hinteren Gelenkträger 35 auf den hinteren Gelenkteil 26 sich zu erstreckender vorderer Gelenkträger 36 vorgesehen. Vermittels einer dritten Gelenkeinheit 38 sind die beiden Gelenkträger 35, 36 und damit die beiden Gelenkteile 26, 28 um eine dritte Gelenkachse G₃ bezüglich einander schwenkbar, welche wiederum bei in der Knick-Neutrallage und Pendel-Neutrallage positioniertem Gelenkteil 26, 28 im Wesentlichen in der Höhenrichtung H verlaufend orientiert sein kann. Auch die dritte Gelenkeinheit 38 gestattet jedoch eine Verschwenkung der beiden Gelenkträger 35, 36 bezüglich einander in im Wesentlichen jeder beliebigen Raumrichtung und ist vorzugsweise gleichermaßen als Kugelgelenk ausgebildet.

Um eine Knickbewegung des Knick/Pendel-Gelenks 24 und damit eine Lenkbewegung der Baumaschine 10 hervorrufen zu können, sind dem Knick/Pendel-Gelenk 24 zwei Kolben/Zylinder-Einheiten 40, 42 zugeordnet. Wie anhand der Kolben/Zylinder-Einheit 40 dargestellt, kann beispielsweise eine Kolbenstange 44 an den vorderen Gelenkteil 28 angekoppelt sein, während ein Zylinder 46 an den Hinterwagen 12 angekoppelt sein kann. Durch aufeinander abgestimmtes Ausfahren bzw. Einziehen der Kolbenstangen 44 der beiden Kolben/Zylinder-Einheiten 40, 42 kann eine Knickbewegung des Knick/Pendel-Gelenks 24 ausgelöst werden, in deren Verlauf der vordere Gelenkteil 28 im Bereich der dritten Gelenkeinheit 38 bezüglich des hinteren Gelenkteils 26 verschwenkt, wobei diese Verschwenkbewegung im in Höhenrichtung H oberen Bereich der beiden Gelenkteile 26, 28 durch das Kopplungsteil 30 geführt ist, welches im Verlaufe dieser Knickbewegung bezüglich jedes Gelenkteils 26, 28 verschwenkt. Im Verlaufe dieser Bewegung knickt nicht nur der Vorderwagen 20 bezüglich des Hinterwagens 12 ein, um somit jeweils einen Lenkwinkel einzustellen, sondern findet auch eine Knickbewegung zwischen Vorderwagen 20 und Hinterwagen 12 im Bereich des Knick/Pendel-Gelenks 24 in Höhenrichtung statt, in dem Sinne, dass in diesem zentralen Bereich die Baumaschine 10 in einem dem jeweils vorgesehenen Lenkwinkel entsprechenden Ausmaß angehoben wird. Da dies ein Zustand erhöhter potentieller Energie ist, versucht die Baumaschine 10 somit selbständig immer den Zustand einzunehmen, in welchem die beiden Gelenkteile 26, 28 in einer der Geradeausfahrt der Baumaschine 10 entsprechenden Knick-Neutrallage bezüglich einander positioniert sind.

Bewegt sich der Bodenverdichter 10 auf unebenem Untergrund, so kann auch aufgrund der gelenkigen Anbindung der beiden Kolben/Zylinder-Einheiten 40, 42 sowohl an den vorderen Gelenkteil 28 als auch an den Hinterwagen 12 der vordere Gelenkteil 28 wiederum im Wesentlichen im Bereich der dritten Gelenkeinheit 38 bezüglich des hinteren Gelenkteils 26 verschwenken, wobei diese Verschwenkung näherungsweise einer Verschwenkung um die Pendelachse P entspricht und die dabei auftretende Bewegung des vorderen Gelenkteils 28 im oberen Bereich desselben wiederum durch das Kopplungsteil 30 geführt ist. Bei einer derartigen Pendelbewegung verwindet die Baumaschine 10 sich in sich, so dass die angetriebenen Räder 18 einerseits und die Verdichterwalze 22 andererseits gleichmäßig belastet auf einem entsprechend unebenen Untergrund aufstehen können.

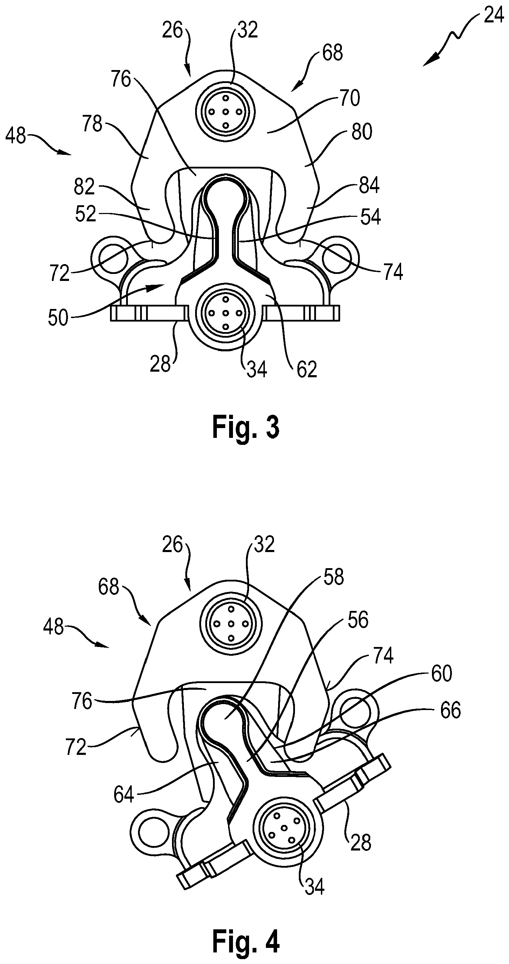

Im Verlaufe einer derartigen Bewegung nähert sich der Rahmen 23 des Vorderwagens 20 des diesen in der Baumaschinenlängsrichtung B auch bereichsweise überlappenden Fahrstands 14 an. Um dabei auszuschließen, dass insbesondere auch bei Durchführung einer Lenkbewegung der dabei noch stärker unter den Fahrstand 14 bewegte Rahmen 23 in Kontakt mit dem Fahrstand 14 oder anderen Bereichen des Hinterwagens 12 tritt, ist in dem Knick/Pendel-Gelenk 24 eine allgemein mit 48 bezeichnete Pendelanschlaganordnung vorgesehen. Deren Funktionalität wird nachfolgend auch mit Bezug auf die Fig. 3 bis 8, welche verschiedene Relativlagen der beiden Gelenkteile 26, 28 bezüglich einander veranschaulichen, erläutert. Dabei ist darauf hinzuweisen, dass die Fig. 3 bis 8 das Knick/Pendel-Gelenk jeweils in Ansicht von oben und bei entferntem Kopplungsteil 30 darstellen.

Die Pendelanschlaganordnung 48 umfasst am vorderen Gelenkteil 28 eine vom vorderen Gelenkteil 28 auf das hintere Gelenkteil 26 sich zu erstreckende erste Pendelanschlagformation 50. Diese erste Pendelanschlagformation 50 ist stab- bzw. plattenartig ausgebildet und weist zwei bezüglich der Höhenrichtung H seitlich voneinander weg orientierte Pendelanschlagflächen 52, 54 auf. Dabei ist die erste Pendelanschlagformation 50 ausgehend von einem Bereich, in welchem auch die zweite Gelenkeinheit 34 vorgesehen ist, mit einem Stegbereich 56 ausgebildet, wobei in diesem Stegbereich 56 die beiden Pendelanschlagflächen 52, 54 näherungsweise einen gleichmäßigen Abstand zueinander aufweisen, was letztendlich bedeutet, dass der Stegbereich 56 quer zu seiner Längserstreckungsrichtung in Richtung von der zweiten Gelenkeinheit 34 weg eine näherungsweise konstante Breite aufweist. Zu erkennen ist dabei in den Figuren, dass in der Höhenrichtung H, also im Wesentlichen orthogonal zu einer Stegbereichslängsrichtung, die Pendelanschlagflächen 52, 54 in Richtung von oben nach unten auseinander verlaufend angeordnet sein können. Ferner ist zu betonen, dass im Sinne der vorliegenden Erfindung der Stegbereich 56 als eine konstante bzw. näherungsweise konstante Breite aufweisend betrachtet werden kann, wenn, beispielsweise bezogen auf eine Länge des Stegbereichs 56 in der Stegbereichslängsrichtung, also in einer Richtung von der Gelenkeinheit 34 weg, von etwa 45 mm bis 65 mm, vorzugsweise etwa 55 mm, der gegenseitige Abstand der Pendelanschlagflächen 52, 54 um nicht mehr als 5 mm, also etwa 10 %, variiert. Dies bedeutet, dass, eine gleichmäßige Zunahme des gegenseitigen Abstands annehmend, die beiden als mit näherungsweise konstantem gegenseitigen Abstand betrachteten Pendelanschlagflächen 52, 54 einen Öffnungswinkel zueinander von bis zu etwa 3° einschließen können, beispielsweise aber auch mit exakt gleichbleibendem Abstand zueinander ausgerichtet sein können. Grundsätzlich könnten die beiden Pendelanschlagflächen 52, 54 auch, anders als im Sinne der vorangehenden Darstellung, einen beispielsweise in Richtung von der Gelenkeinheit 34 weg vorzugsweise mit im Wesentlichen konstanter Rate zunehmenden gegenseitigen Abstand aufweisen, so dass in diesem Stegbereich 56 oder zumindest einem Teil des Stegbereichs 56 die beiden Pendelanschlagflächen 52, 54 näherungsweise ungekrümmt verlaufen, wobei der Stegbereich 56 oder dieser Teil des Stegbereichs 56 wiederum eine Länge im Bereich von etwa 45 mm bis 65 mm, vorzugsweise etwa 55 mm, aufweisen kann.

An diesen Stegbereich 56 schließt ein bezüglich des Stegbereichs 56 erweiterter Kopfbereich 58 an, mit welchem die erste Pendelanschlagformation in Abstand zum vorderen Gelenkteil 28 bzw. auch zur zweiten Gelenkeinheit 34 endet. Im Übergang vom Stegbereich 56 zum Kopfbereich 58 nimmt der gegenseitige Abstand der Pendelanschlagflächen 52, 54 allmählich zu bis zu einem Bereich maximaler Breite des Kopfbereichs und somit maximalen Abstands der Pendelanschlagflächen 52, 54, die an dem vom Stegbereich 56 abgewandten Ende des Kopfbereichs 58 ineinander übergehen bzw. aneinander anschließen. Um eine ausreichende Stabilität der ersten Pendelanschlagformation zu gewährleisten, sind der Stegbereich 56 bzw. der Kopfbereich 58 durch einen plattenartigen Stützbereich 60 hinterlegt bzw. mit diesem vorzugsweise integral ausgebildet, so dass zwischen dem Kopfbereich 58 und einem Anbindungsbereich 62, in welchem die erste Pendelanschlagformation 50 an den zweiten Gelenkteil 28 angebunden ist, beidseits des Stegbereichs 56 und über dem plattenartigen Stützbereich 60 Eingriffstaschen 64, 66 gebildet sind.

Die Pendelanschlaganordnung 48 umfasst ferner am hinteren Gelenkteil 26 eine zweite Pendelanschlagformation 68. Auch diese ist im Wesentlichen plattenartig ausgebildet und weist, ausgehend von einem Anbindungsbereich 70, in welchem die zweite Pendelanschlagformation 68 an den ersten Gelenkteil 26 angebunden ist, zwei die erste Pendelanschlagformation 50 bezüglich der Höhenrichtung H seitlich bzw. beidseits von außen umgreifende Pendelanschlagfinger 72, 74. Zwischen den Pendelanschlagfingern 72, 74 ist ein Aufnahmeraum 76 gebildet, in welchen die erste Pendelanschlagformation 50 mit ihrem Stegbereich 56 bzw. ihrem Kopfbereich 58 eingreifend positioniert ist.

Die Pendelanschlagfinger 72, 74 sind so geformt, dass ihr gegenseitiger Abstand in einem jeweiligen ersten Erstreckungsbereich 78, 80 zunimmt und einem daran anschließenden zweiten Erstreckungsbereich 82, 84 abnimmt. Dies bedeutet auch, dass, ausgehend vom Anbindungsbereich 70, die durch den gegenseitigen Abstand der Pendelanschlagfinger 72, 74 definierte Breite des Raumbereichs 76 zunächst im Bereich der ersten Erstreckungsbereiche 78, 80 zunimmt und dann im Bereich der zweiten Erstreckungsbereiche 82, 84 abnimmt, um dann im Bereich abgerundeter Enden der beiden Pendelanschlagfinger 72, 74 wieder zuzunehmen.

Durch die Pendelanschlaganordnung 48 bzw. die beiden Pendelanschlagformationen 50, 68 derselben wird gewährleistet, dass der vordere Gelenkteil 28 nur in begrenztem Ausmaß eine Pendelbewegung bezüglich des hinteren Gelenkteils 26 durchführen kann. Dieses begrenzte Ausmaß, also in jeder Pendelbewegungsrichtung die maximale Pendelauslenkung, nimmt überdies mit zunehmender Knickauslenkung, also zunehmendem Lenkwinkel des Vorderwagens 20 bezüglich des Hinterwagens 12, vorzugsweise stetig ab. Dies wird nachfolgend mit Bezug auf die Fig. 3 bis 8 erläutert.

Die Fig. 3 zeigt einen Zustand, in welchem die beiden Gelenkteile 26, 28 und somit Hinterwagen 12 und Vorderwagen 20 in einer Knick-Neutrallage und auch einer Pendel-Neutrallage bezüglich einander sind, was bedeutet, dass die Baumaschine 10 sich auf exakt ebenem Untergrund geradeaus bewegen soll. Man erkennt in Fig. 3, dass die erste Pendelanschlagformation 50 im Wesentlichen zentrisch in den Aufnahmeraum 76 eingreift und somit die beiden Pendelanschlagflächen 52, 54 zu den diesen jeweils gegenüberliegenden und damit jeweils einen Pendelanschlag 86 bzw. 88 bereitstellenden Pendelanschlagfingern 72, 74 einen gleichen Abstand aufweisen.

Die Fig. 4 zeigt einen Zustand, in welchem zur Herbeiführung eines Lenkwinkels von 30° der vordere Gelenkteil 28 bezüglich des hinteren Gelenkteils 26 eingeknickt ist. In diesem Zustand ist keine Pendelauslenkung vorhanden, so dass der Kopfbereich 58 nach wie vor näherungsweise mittig zwischen den beiden Pendelanschlagfingern 72, 74 positioniert ist. Ein Wirksamwerden der Pendelanschläge 86, 88 ist mangels aufgetretener Pendelauslenkung nicht vorhanden.

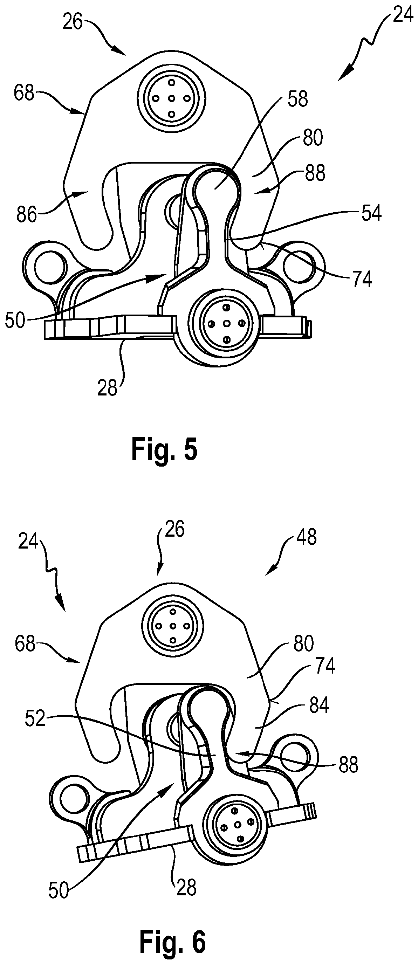

Die Fig. 5 zeigt das Knick/Pendel-Gelenk 24 in einem Zustand, in welchem in der Knick-Neutrallage, also bei einem Lenkwinkel von 0°, der vordere Gelenkteil 28 eine erste maximale Pendelauslenkung bezüglich des hinteren Gelenkteils 26 aufweist. Die erste maximale Pendelauslenkung entspricht dabei der maximalen Pendelauslenkung in einer ersten Pendelbewegungsrichtung, bei welcher die erste Pendelanschlagformation 50 mit ihrer Pendelanschlagfläche 54 in Kontakt mit dem Pendelanschlagfinger 74 ist und somit der Pendelanschlag 88 wirksam ist. Entsprechend wird bei Auslenkung in der entgegengesetzten Richtung, also einer zweiten Pendelbewegungsrichtung, die Pendelanschlagfläche 52 bei Erreichen einer zweiten maximalen Pendelauslenkung in Kontakt mit dem Pendelanschlagfinger 72 treten und somit der Pendelanschlag 86 wirksam werden.

Zu erkennen ist in Fig. 5, dass in diesem Zustand, in welchem der Lenkwinkel 0° beträgt, die beiden Gelenkteile 26, 28 also in ihrer Knick-Neutrallage bezüglich einander sind, die erste Pendelanschlagformation 50 in nahezu maximalem Ausmaß in den Aufnahmeraum 76 eingreift und somit bei Erreichen der ersten maximalen Pendelauslenkung der Kopfbereich 58 mit einem dort sich erstreckenden Abschnitt der Pendelanschlagfläche 54 in Anlage an dem ersten Erstreckungsbereich 80 des Pendelanschlagfingers 74 ist.

Die Fig. 6 veranschaulicht den Zustand, bei welchem, wiederum bei maximaler erster Pendelauslenkung eine zu einem Lenkwinkel von 10° führende Knickauslenkung der beiden Gelenkteile 26 bzw. 28 bezüglich einander vorliegt. Zu erkennen ist, dass in diesem Zustand der Kopfbereich 58 mit dem daran vorgesehenen Bereich der Pendelanschlagfläche 54 nicht mehr in Anlage am Pendelanschlagfinger 74 ist, sondern dieser mit seinem zweiten Erstreckungsabschnitt 84, insbesondere dem abgerundeten Endbereich desselben, in Anlage an einem im Stegbereich 56 sich erstreckenden Abschnitt der Pendelanschlagfläche 54 ist. Damit hat einerseits der Bereich der Wechselwirkung zwischen dem Pendelanschlagfinger 74 und der ersten Pendelanschlagformation 50 sich vom ersten Erstreckungsbereich 80 in den zweiten Erstreckungsbereich 84 des Pendelanschlagfingers 74 verlagert, und hat andererseits an der ersten Pendelanschlagformation 50 der Bereich, in welchem der Pendelanschlag 88 wirksam ist, bezüglich des Zustands mit geringerer Knickauslenkung bzw. nicht vorhandener Knickauslenkung (beispielsweise Lenkwinkel 0°) sich näher an den zweiten Gelenkteil 28 bzw. den Anbindungsbereich 62 der ersten Pendelanschlagformation 50 heranbewegt. Aufgrund der Geometrie der miteinander in Wechselwirkung tretenden Pendelanschlagfläche 54 und des zugeordneten Pendelanschlagfingers 74 wird dadurch die erste maximale Pendelauslenkung bezüglich des in Fig. 5 dargestellten Zustandes verringert. Während beispielsweise im Zustand der Fig. 5 die erste maximale Pendelauslenkung einem Pendelwinkel von beispielsweise 11,7° ausgehend von der Pendel-Neutrallage der Fig. 3 entsprechen kann, kann bei dem in Fig. 6 dargestellten Zustand bei einem Lenkwinkel von 10° die erste maximale Pendelauslenkung bereits auf einen Wert von etwa 10,8° verringert sein. Aufgrund der symmetrischen Ausgestaltung ist, wie vorangehend bereits dargelegt, bei Auslenkung in der entgegengesetzten Richtung auch eine zweite maximale Pendelauslenkung vorgesehen, wobei für eine jeweils vorgegebene Knickauslenkung die erste maximale Pendelauslenkung und die zweite maximale Pendelauslenkung zusammen einen maximalen Pendelauslenkungsbereich definieren, der, wiederum die symmetrische Ausgestaltung berücksichtigend, jeweils dem Doppelten der ersten maximalen Pendelauslenkung bzw. der zweiten maximalen Pendelauslenkung entsprechen kann. Bei dem in Fig. 5 dargestellten Zustand ist somit ein maximaler Pendelauslenkungsbereich vorhanden, der beispielsweise bei etwa 23,4° liegen kann. Dieser maximale Pendelauslenkungsbereich hat sich bei einem Lenkwinkel von 10° bzw. einer entsprechenden Knickauslenkung der beiden Gelenkteile 26, 28 bezüglich einander bereits auf einen Wert von beispielsweise etwa 21,6° verringert.

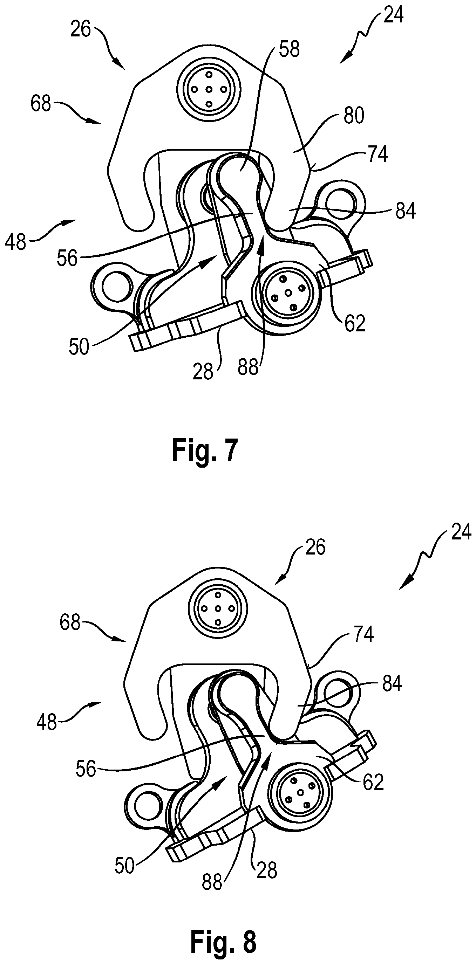

Bei einem Übergang zu einem in Fig. 7 veranschaulichten Zustand der Knickauslenkung zwischen hinterem Gelenkteil 26 und vorderem Gelenkteil 28, die einem Lenkwinkel von 20° entspricht, verschiebt sich der Bereich, in welchem ein jeweiliger Pendelanschlagfinger 72, 74, in dem in Fig. 7 dargestellten Auslenkungszustand wiederum der Pendelanschlagfinger 74, in Wechselwirkung mit der zugeordneten Pendelanschlagfläche 52 bzw. 54 tritt, noch näher an den vorderen Gelenkteil 28 bzw. dem Anbindungsbereich 62 der ersten Pendelanschlagformation 50 heran. Dies führt zu einer weiteren Verringerung der ersten maximalen Pendelauslenkung bzw. aufgrund der symmetrischen Ausgestaltung auch der zweiten maximalen Pendelauslenkung auf beispielsweise jeweils 9,3° und somit einem maximalen Pendelauslenkungsbereich von 18,6°.

Die Fig. 8 veranschaulicht schließlich einen Zustand, in welchem die Knickauslenkung zwischen vorderem Gelenkteil 28 und hinterem Gelenkteil 26 einem Lenkwinkel von 30° entspricht. In diesem Zustand kommt zur Begrenzung der Pendelbewegung ein jeweiliger Pendelanschlagfinger 72 bzw. 74 in Anlage an der zugeordneten Pendelanschlagfläche, hier der Pendelanschlagfläche 54, in einem Bereich, der noch näher am Anbindungsbereich 62 bzw. am vorderen Gelenkteil 28 ist. Aufgrund dieser Wechselwirkung wird der Pendelanschlag 88 nunmehr bei einer ersten maximalen Pendelauslenkung bzw. zweiten maximalen Pendelauslenkung von etwa 7,6° wirksam, so dass sich für einen Lenkwinkel von 30° ein maximaler Pendelauslenkungsbereich von etwa 15,2° ergibt.

Die voranstehenden Ausführungen zeigen, dass bei der in Fig. 2 dargestellten Ausgestaltung eines Knick/Pendel-Gelenks aufgrund der speziellen Ausgestaltung der beiden Pendelanschlagformationen 50, 68 der Pendelanschlaganordnung 48 bei Durchführung einer Lenkbewegung und dem dazu herbeigeführten Einknicken der beiden Gelenkteile 26, 28 bezüglich einander der für eine Pendelbewegung für den Vorderwagen 20 bezüglich des Hinterwagens 12 insgesamt zur Verfügung stehende Pendelauslenkungsbereich, dieser begrenzt zwischen den beiden maximalen Pendelauslenkungen, sukzessive abnimmt. Dies führt zu einer deutlich erhöhten Sicherheit gegen das Auftreten eines Kontakts zwischen dem Vorderwagen 20, insbesondere dem Rahmen 23 desselben, und dem Hinterwagen 12, insbesondere dem Fahrstand 14 desselben. Erreicht wird diese Funktionalität dadurch, dass die Pendelanschlagflächen 52, 54 der ersten Pendelanschlagformation nach Art von Nockenflächen wirksam werden, die von den Pendelanschlagfingern 72, 74 der zweiten Pendelanschlagformation 68 abgetastet werden und in Verbindung mit diesen jeweilige Pendelanschläge 86, 88 bilden. Die Bereiche, in welchen die Pendelanschlagflächen 52, 54 einerseits und die Pendelanschlagfinger 72, 74 andererseits miteinander in Wechselwirkung treten und somit für einen jeweiligen Lenkwinkel als Pendelanschlag wirksam werden, ändern sich abhängig vom Lenkwinkel bzw. der Knickauslenkung der beiden Gelenkteile 26, 28 bezüglich einander, so dass durch die in den Fig. 3 bis 8 dargestellte Geometrie der beiden Pendelanschlagformationen 50, 68 die zur Verringerung des maximalen Pendelauslenkungsbereichs führende Wechselwirkung bereitgestellt wird.

## Patentansprüche

1. Knick/Pendel-Gelenk zur gelenkigen Verbindung eines Hinterwagens (12) mit einem Vorderwagen (20) einer Baumaschine (10), insbesondere Bodenverdichter, umfassend einen an einem Hinterwagen (12) einer Baumaschine (10) anzubringenden hinteren Gelenkteil (26), einen an einem Vorderwagen (20) einer Baumaschine (10) anzubringenden vorderen Gelenkteil (28) sowie einen den hinteren Gelenkteil (26) mit dem vorderen Gelenkteil (28) gelenkig koppelnden Gelenkmechanismus (25), wobei der Gelenkmechanismus (25) den hinteren Gelenkteil (26) und den vorderen Gelenkteil (28) zur Durchführung einer einer Lenkbewegung zwischen Hinterwagen (12) und Vorderwagen (20) entsprechenden Knickbewegung und einer einer Torsionsbewegung zwischen Hinterwagen (12) und Vorderwagen (20) entsprechenden Pendelbewegung koppelt, wobei dem Gelenkmechanismus (25) eine Pendelanschlaganordnung (48) zur Begrenzung der Pendelbewegung des vorderen Gelenksteils (28) bezüglich des hinteren Gelenksteils (26) zugeordnet ist, wobei die Pendelanschlaganordnung (48) einen ersten Pendelanschlag (88) umfasst zum Vorgeben einer ersten maximalen Pendelauslenkung bei Auslenkung des vorderen Gelenkteils (28) bezüglich des hinteren Gelenksteils (26) in einer ersten Pendelbewegungsrichtung und einen zweiten Pendelanschlag (86) umfasst zum Vorgeben einer zweiten maximalen Pendelauslenkung bei Auslenkung des vorderen Gelenkteils (28) bezüglich des hinteren Gelenksteils (26) in einer der ersten Pendelbewegungsrichtung entgegengesetzten zweiten Pendelbewegungsrichtung, wobei die erste maximale Pendelauslenkung und die zweite maximale Pendelauslenkung einen maximalen Pendelauslenkungsbereich für die Pendelbewegung des vorderen Gelenkteils (28) bezüglich des hinteren Gelenkteils (26) definieren,
**dadurch gekennzeichnet,**
**dass** bei Durchführung einer Knickbewegung mit zunehmender Knickauslenkung ausgehend von einer Knick-Neutrallage des vorderen Gelenksteils (28) bezüglich des hinteren Gelenkteils (26) der maximale Pendelauslenkungsbereich abnimmt.

2. Knick/Pendel-Gelenk nach Anspruch 1,
**dadurch gekennzeichnet, dass** bei Durchführung der Knickbewegung mit zunehmender Knickauslenkung ausgehend von der Knick-Neutrallage der maximale Pendelauslenkungsbereich stetig abnimmt.

3. Knick/Pendel-Gelenk nach Anspruch 1 oder 2,
**dadurch gekennzeichnet, dass** bei in der Knick-Neutrallage bezüglich einander positioniertem vorderem Gelenkteil (28) und hinterem Gelenkteil (26) die erste maximale Pendelauslenkung oder/und die zweite maximale Pendelauslenkung ausgehend von einer Pendel-Neutrallage im Bereich von 8° bis 15°, vorzugsweise bei etwa 11,7°, liegt, oder/und dass bei in der Knick-Neutrallage bezüglich einander positioniertem vorderem Gelenkteil (28) und hinterem Gelenkteil (26) der maximale Pendelauslenkungsbereich in einem Bereich von 20° bis 27°, vorzugsweise bei etwa 23,4°, liegt.

4. Knick/Pendel-Gelenk nach einem der vorangehenden Ansprüche,
**dadurch gekennzeichnet, dass** bei in einer einem Lenkwinkel von 30° entsprechenden Knickauslenkung des vorderen Gelenksteils (28) bezüglich des hinteren Gelenkteils (26) positioniertem vorderem Gelenkteil (28) und hinterem Gelenkteil (26) die erste maximale Pendelauslenkung oder/und die zweite maximale Pendelauslenkung ausgehend von einer Pendel-Neutrallage des vorderen Gelenksteils (28) bezüglich des hinteren Gelenksteils (26) im Bereich von 4° bis 11°, vorzugsweise bei etwa 7,6°, liegt, oder/und dass bei in einer einem Lenkwinkel von 30° entsprechenden Knickauslenkung des vorderen Gelenksteils (28) bezüglich des hinteren Gelenkteils (26) positioniertem vorderem Gelenkteil (28) und hinterem Gelenkteil (26) der maximale Pendelauslenkungsbereich in einem Bereich von 12° bis 19°, vorzugsweise bei etwa 15,2°, liegt.

5. Knick/Pendel-Gelenk nach einem der vorangehenden Ansprüche,
**dadurch gekennzeichnet, dass** das der Gelenkmechanismus (25) umfasst:
- ein im Bereich einer ersten Gelenkeinheit (32) mit dem hinteren Gelenkteil (26) und im Bereich einer zweiten Gelenkeinheit (34) mit dem vorderen Gelenkteil (28) gelenkig verbundenes Kopplungsteil (30),
- einen vom hinteren Gelenkteil (26) auf das vordere Gelenkteil (28) sich zu erstreckenden hinteren Gelenkträger (35), einen von dem vorderen Gelenkteil (28) auf das hinteren Gelenkteil (26) sich zu erstreckenden vorderen Gelenkträger (36) sowie eine in einer Abstandsrichtung (A) des vorderen Gelenkteils (28) bezüglich des hinteren Gelenkteils (26) den hinteren Gelenkträger (35) zwischen der ersten Gelenkeinheit (32) und der zweiten Gelenkeinheit (34) und orthogonal zur Abstandsrichtung (A) in Abstand zur ersten Gelenkeinheit (32) und zur zweiten Gelenkeinheit (34) gelenkig mit dem vorderen Gelenkträger (28) koppelnde dritte Gelenkeinheit (38),
vorzugsweise wobei die erste Gelenkeinheit (32) oder/und die zweite Gelenkeinheit (34) oder/und die dritte Gelenkeinheit (38) nach Art eines Kugelgelenks ausgebildet ist.

6. Knick/Pendel-Gelenk nach einem der vorangehenden Ansprüche,
**dadurch gekennzeichnet, dass** die Pendelanschlaganordnung (48) umfasst:
- an einem Gelenkteil von vorderem Gelenkteil (28) und hinterem Gelenkteil (26) einen auf das andere Gelenkteil von vorderem Gelenkteil (28) und hinterem Gelenkteil (26) sich zu erstreckende erste Pendelanschlagformation (50) mit zwei voneinander abgewandt orientierten Pendelanschlagflächen (52, 54),
- am anderen Gelenkteil eine auf das eine Gelenkteil sich zu erstreckende und die erste Pendelanschlagformation (50) mit zwei Pendelanschlagfingern (72, 74) gabelartig umgreifende zweite Pendelanschlagformation (68),
wobei jeder Pendelanschlagfinger (72, 74) einer der Pendelanschlagflächen (52, 54) gegenüberliegt und mit dieser einen Pendelanschlag (86, 88) bereitstellt.

7. Knick/Pendel-Gelenk nach Anspruch 6,
**dadurch gekennzeichnet, dass** die erste Pendelanschlagformation (50) einen in Richtung vom einen Gelenkteil sich weg erstreckenden Stegbereich (56) und an einem vom einen Gelenkteil entfernten Endbereich des Stegbereichs (56) einen bezüglich des Stegbereichs (56) erweiterten Kopfbereich (58) aufweist, wobei der Abstand der voneinander abgewandt orientierten Pendelanschlagflächen (52, 54) zueinander im Kopfbereich (58) wenigstens bereichsweise größer ist, als im Stegbereich (56), vorzugsweise wobei wenigstens in einem Teil des Stegbereichs (56) der Abstand der voneinander abgewandt orientierten Pendelanschlagflächen (52, 54) zueinander im Wesentlichen konstant ist oder sich in einer Stegbereichslängsrichtung mit im Wesentlichen konstanter Rate verändert.

8. Knick/Pendel-Gelenk nach Anspruch 7,
**dadurch gekennzeichnet, dass** im Kopfbereich (58) der Abstand der voneinander abgewandt orientierten Pendelanschlagflächen (52, 54) zueinander ausgehend vom Stegbereich (56) bis zu einem maximalen Abstand zunimmt.

9. Knick/Pendel-Gelenk nach einem der Ansprüche 6-8,
**dadurch gekennzeichnet, dass** der gegenseitige Abstand der Pendelanschlagfinger (72, 74) in Richtung vom anderen Gelenkteil weg in einem ersten Erstreckungsbereich (78, 80) der Pendelanschlagfinger (72, 74) zunimmt und einem an den ersten Erstreckungsbereich (78, 80) anschließenden zweiten Erstreckungsbereich (82, 84) der Pendelanschlagfinger (72, 74) abnimmt.

10. Knick/Pendel-Gelenk nach Anspruch 6 und Anspruch 9,
**dadurch gekennzeichnet, dass** ausgehend von der Knick-Neutrallage mit zunehmender Knickauslenkung des vorderen Gelenksteils (28) bezüglich des hinteren Gelenkteils (26) jeder Pendelanschlagfinger (72, 74) der zweiten Pendelanschlagformation (68) in einem dem einen Gelenkteil näherliegenden Bereich der zugeordneten Pendelanschlagfläche (52, 54) mit dieser Pendelanschlagfläche (52, 54) der ersten Pendelanschlagformation (50) zum Bereitstellen eines jeweiligen Pendelanschlags (86, 88) zusammenwirkt, oder/und dass ausgehend von der Knick-Neutrallage mit zunehmender Knickauslenkung des vorderen Gelenksteils (28) bezüglich des hinteren Gelenkteils (26) jeder Pendelanschlagfinger (72, 74) der zweiten Pendelanschlagformation (68) mit einem dem anderen Gelenkteil näherliegenden Bereich des jeweiligen Pendelanschlagfingers (72, 74) mit der zugeordneten Pendelanschlagfläche (52, 54) der ersten Pendelanschlagformation (50) zum Bereitstellen eines jeweiligen Pendelanschlags (86, 88) zusammenwirkt.

11. Knick/Pendel-Gelenk nach Anspruch 9 und Anspruch 10,
**dadurch gekennzeichnet, dass** in der Knick-Neutrallage jeder Pendelanschlagfinger (72, 74) der zweiten Pendelanschlagformation (68) im Bereich seines ersten Erstreckungsbereichs (78, 80) mit der zugeordneten Pendelanschlagfläche (52, 54) im Bereich des Kopfbereichs (58) der ersten Pendelanschlagformation (50) zum Bereitstellen eines jeweiligen Pendelanschlags (86, 88) zusammenwirkt, oder/und dass in einer einem Lenkwinkel von 30° entsprechenden Knickauslenkung des vorderen Gelenkteils (28) bezüglich des hinteren Gelenkteils (26) jeder Pendelanschlagfinger (72, 74) der zweiten Pendelanschlagformation (68) im Bereich seines zweiten Erstreckungsbereichs (82, 84) mit der zugeordneten Pendelanschlagfläche (52, 54) im Bereich des Stegbereichs (56) der ersten Pendelanschlagformation (50) zum Bereitstellen eines jeweiligen Pendelanschlags (86, 88) zusammenwirkt.

12. Knick/Pendel-Gelenk nach einem der Ansprüche 6-10,
**dadurch gekennzeichnet, dass** das eine Gelenkteil das vordere Gelenkteil (28) und das andere Gelenkteil das hintere Gelenkteil (26) ist.

13. Knick/Pendel-Gelenk nach Anspruch 5 und einem der Ansprüche 6-12, sofern auf Anspruch 5 rückbezogen,
**dadurch gekennzeichnet, dass** das in einer Richtung orthogonal zur Abstandsrichtung (A) die erste Pendelanschlagformation (50) und die zweite Pendelanschlagformation (68) zwischen der ersten Gelenkeinheit (32) und zweiten Gelenkeinheit (34) einerseits und der dritten Gelenkeinheit (38) andererseits angeordnet sind, oder/und dass bezüglich einer Richtung (H) orthogonal zur Abstandsrichtung (A) die Pendelanschlagflächen (52, 54) der ersten Pendelanschlagformation (50) seitlich voneinander weg orientiert sind oder/und die Pendelanschlagfinger (72, 74) der zweiten Pendelanschlagformation (68) die erste Pendelanschlagformation (50) seitlich von außen umgreifen.

14. Baumaschine, insbesondere Bodenverdichter, umfassend einen Hinterwagen (12) und einen vermitteltes eines Knick/Pendel-Gelenks (24) nach einem der vorangehenden Ansprüche mit dem Hinterwagen (12) verbundenen Vorderwagen (20),
vorzugsweise wobei am Hinterwagen (12) ein Fahrstand (14) vorgesehen ist, wobei in einer Baumaschinenlängsrichtung (B) der Fahrstand (14) das Knick/Pendel-Gelenk (24) wenigstens bereichsweise überlappt.

15. Baumaschine nach Anspruch 14,
**dadurch gekennzeichnet, dass** das am Vorderwagen (20) wenigstens ein Arbeitsgerät, vorzugsweise Verdichterwalze (22), vorgesehen ist, oder/und dass am Hinterwagen (12) ein Antriebsaggregat (16) vorgesehen ist.

## Claims

1. An articulated/swivel joint for the articulated connection between a rear section (12) and a front section (20) of a construction machine (10), in particular a soil compactor, comprising a rear joint part (26), which is to be fitted on a rear section (12) of a construction machine (10), a front joint part (28), which is to be fitted on a front section (20) of a construction machine (10), and a joint mechanism (25), which couples the rear joint part (26) to the front joint part (28) in a jointed manner, wherein the joint mechanism (25) couples the rear joint part (26) and the front joint part (28) in order to perform an articulated movement, which corresponds to a steering movement between the rear section (12) and front section (20), and a swivel movement, which corresponds to a torsion movement between the rear section (12) and front section (20), wherein a swivel-stop arrangement (48) is assigned to the joint mechanism (25) for limiting the swivel movement of the front joint part (28) in relation to the rear joint part (26), wherein the swivel-stop arrangement (48) comprises a first swivel stop (88) for predetermining a first maximum amount of swivel deflection during deflection of the front joint part (28) in relation to the rear joint part (26) in a first swivel-movement direction and also comprises a second swivel stop (86) for predetermining a second maximum amount of swivel deflection during deflection of the front joint part (28) in relation to the rear joint part (26) in a second swivel-movement direction, which is opposed to the first swivel-movement direction, wherein the first maximum amount of swivel deflection and the second maximum amount of swivel deflection define a maximum swivel-deflection range for the swivel movement of the front joint part (28) in relation to the rear joint part (26),
**characterised in that**
when an articulated movement is being performed, the maximum swivel-deflection range decreases as the amount of articulated deflection increases, starting from a neutral position of articulation of the front joint part (28) in relation to the rear joint part (26).

2. Articulated/swivel joint according to claim 1,
**characterised in that** when an articulated movement is being performed, the maximum swivel-deflection range continuously decreases as the amount of articulated deflection increases, starting from a neutral position of articulation.

3. Articulated/swivel joint according to claim 1 or 2,
**characterised in that** in the case of the front joint part (28) and the rear joint part (26) positioned in the neutral position of articulation in relation to one another, the first maximum amount of swivel deflection and/or the second maximum amount of swivel deflection starting from a neutral position of swivel lies in the range from 8° to 15°, preferably around 11.7°, and/or **in that** in the case of the front joint part (28) and the rear joint part (26) positioned in the neutral position of articulation in relation to one another, the maximum swivel-deflection range lies in the range from 20° to 27°, preferably around 23.4°.

4. Articulated/swivel joint according to any one of the preceding claims,
**characterised in that** in the case of the front joint part (28) and the rear joint part (26) being positioned in an articulated deflection of the front joint part (28) in relation to the rear joint part (26) corresponding to a steering angle of 30°, the first maximum amount of swivel deflection and/or the second maximum amount of swivel deflection, starting from a neutral position of swivel of the front joint part (28) in relation to the rear joint part (26) lies in the range from 4° to 11°, preferably at around 7.6°, and/or **in that** in the case of the front joint part (28) and the rear joint part (26) are positioned at an articulated deflection of the front joint part (28) in relation to the rear joint part (26) corresponding to a steering angle of 30°, the maximum swivel-deflection range lies in a range from 12° to 19°, preferably at around 15.2°.

5. Articulated/swivel joint according to any one of the preceding claims,
**characterised in that** the joint mechanism (25) comprises:
- a coupling part (30) articulated in the region of a first joint unit (32) with the rear joint part (26) and in the region of a second joint unit (34) with the front joint part (28),
- a rear joint support (35) to be extended from the rear joint part (26) to the front joint part (28), a front joint support (36) to be extended from the front joint part (28) to the rear joint part (36) and a third joint unit (38) coupling in a distance direction (A) of the front joint part (28) in relation to the rear joint part (26) the rear joint support (35) between the first joint unit (32) and the second joint unit (34) and orthogonal to the distance direction (A) at a distance from the first joint unit (32) and the second joint unit (34) articulated to the front joint support (28),
preferably wherein the first joint unit (32) and/or the second joint unit (34) and/or the third joint unit (38) is designed in the manner of a ball joint.

6. Articulated/swivel joint according to any one of the preceding claims, **characterised in that** the swivel-stop arrangement (48) comprises:
- on a joint part of the front joint part (28) and the rear joint part (26) a first swivel-stop formation (50) extending towards the other joint part of the front joint part (28) and the rear joint part (26) with two swivel-stop surfaces (52, 54) oriented away from each other,
- on the other joint part a second swivel-stop formation (68) extending towards the one joint part and encompassing the first swivel-stop formation (50) with two swivel-stop fingers (72, 74) in a fork-like manner,
wherein each swivel-stop finger (72, 74) lies opposite one of the swivel-stop surfaces (52, 54) and provides a swivel stop (86, 88) therewith.

7. Articulated/swivel joint according to claim 6,
**characterised in that** the first swivel-stop formation (50) has a web region (56) extending in the direction away from a joint part and, at an end region of the web region (56) remote from a joint part a head region (58) which is widened in relation to the web region (56), wherein the distance between the swivel-stop surfaces (52, 54) oriented away from each other is at least partially greater in the head region (58) than in the web region (56),
preferably wherein at least in a part of the web region (56) the distance between the swivel-stop surfaces (52, 54) oriented away from each other is substantially constant or changes in a longitudinal direction of the web region at a substantially constant rate.

8. Articulated/swivel joint according to claim 7,
**characterised in that** in the head region (58) the distance between the swivel-stop surfaces (52, 54) oriented away from each other increases from the web region (56) to a maximum distance.

9. Articulated/swivel joint according to any one of claims 6-8,
**characterised in that** the mutual distance between the swivel-stop fingers (72, 74) in the direction away from the other joint part increases in a first extension region (78, 80) of the swivel-stop fingers (72, 74) and decreases in a second extension region (82, 84) of the swivel-stop fingers (72, 74) adjoining the first extension region (78, 80).

10. Articulated/swivel joint according to claim 6 and claim 9,
**characterised in that** starting from the neutral position of articulation with increasing articulation deflection of the front joint part (28) in relation to the rear joint part (26), each swivel-stop finger (72, 74) of the second swivel-stop formation (68) in a region of the assigned swivel-stop surface (52, 54) closer to one joint part cooperates with this swivel-stop surface (52, 54) of the first swivel-stop formation (50) to provide a respective swivel stop (86, 88), and/or **in that** starting from the neutral position of articulation with increasing articulation deflection of the front joint part (28) in relation to the rear joint part (26), each swivel-stop finger (72, 74) of the second swivel-stop formation (68) cooperates with a region of the respective swivel-stop finger (72, 74) closer to the other joint part with the assigned swivel-stop surface (52, 54) of the first swivel-stop formation (50) to provide a respective swivel stop (86, 88).

11. Articulated/swivel joint according to claim 9 and claim 10,
**characterised in that** in the neutral position of articulation each swivel-stop finger (72, 74) of the second swivel-stop formation (68) cooperates in the region of its first extension region (78, 80) with the assigned swivel-stop surface (52, 54) in the region of the head region (58) of the first swivel-stop formation (50) to provide a respective swivel stop (86, 88), and/or **in that** in an articulation deflection of the front joint part (28) in relation to the rear joint part (26) corresponding to a steering angle of 30°, each swivel-stop finger (72, 74) of the second swivel-stop formation (68) cooperates in the region of its second extension region (82, 84) with the assigned swivel-stop surface (52, 54) in the region of the web region (56) of the first swivel-stop formation (50) to provide a respective swivel stop (86, 88).

12. Articulated/swivel joint according to any one of claims 6 to 10,
**characterised in that** the one joint part is the front joint part (28) and the other joint part is the rear joint part (26).

13. Articulated/swivel joint according to claim 5 and any one of claims 6 to 12, if referred back to claim 5,
**characterised in that** in a direction orthogonal to the distance direction (A) the first swivel-stop formation (50) and the second swivel-stop formation (68) are disposed between the first joint unit (32) and second joint unit (34) on the one hand and the third joint unit (38) on the other hand, and/or **in that** in relation to a direction (H) orthogonal to the distance direction (A), the swivel-stop surfaces (52, 54) of the first swivel stop formation (50) are laterally oriented away from each other and/or the swivel-stop fingers (72, 74) of the second swivel-stop formation (68) encompass the first swivel-stop formation (50) laterally from the outside.

14. Construction machine, in particular a soil compactor, comprising a rear section (12) and a front section (20) connected to the rear section (12) by means of an articulated/swivel joint (24) according to any one of the preceding claims, preferably wherein an operator's stand (14) is provided on the rear section (12), wherein in a construction machine longitudinal direction (B) the operator's stand (14) overlaps the articulated/swivel joint (24) at least in some regions.

15. Construction machine according to claim 14,
**characterised in that** at least one working tool, preferably a compactor roller (22), is provided on the front section (20), and/or **in that** a drive assembly (16) is provided on the rear section (12).

## Revendications

1. Articulation articulée/pivotante pour la liaison articulée entre une section arrière (12) et une section avant (20) d'une machine de construction (10), en particulier d'un compacteur de sol, comprenant une partie d'articulation arrière (26), qui doit être montée sur une section arrière (12) d'une machine de construction (10), une partie d'articulation avant (28), qui doit être montée sur une section avant (20) d'une machine de construction (10), et un mécanisme d'articulation (25), qui couple la partie d'articulation arrière (26) à la partie d'articulation avant (28) de manière articulée, dans lequel le mécanisme d'articulation (25) couple la partie d'articulation arrière (26) et la partie d'articulation avant (28) afin d'effectuer un mouvement d'articulation, qui correspond à un mouvement de direction entre la section arrière (12) et la section avant (20), et un mouvement de pivotement, qui correspond à un mouvement de torsion entre la section arrière (12) et la section avant (20), dans lequel un dispositif de butée de pivotement (48) est associé au mécanisme d'articulation (25) pour limiter le mouvement de pivotement de la partie d'articulation avant (28) par rapport à la partie d'articulation arrière (26), dans lequel le dispositif de butée de pivotement (48) comprend une première butée de pivotement (88) pour prédéterminer une première valeur maximale de déviation de pivotement lors de la déviation de la partie d'articulation avant (28) par rapport à la partie d'articulation arrière (26) dans une première direction de mouvement de pivotement et comprend également une deuxième butée de pivotement (86) pour prédéterminer une deuxième valeur maximale de déviation de pivotement lors de la déviation de la partie d'articulation avant (28) par rapport à la partie d'articulation arrière (26) dans une deuxième direction de mouvement de pivotement, opposée à la première direction de mouvement de pivotement, dans lequel la première déviation maximale de pivotement et la deuxième déviation maximale de pivotement définissent une plage maximale de déviation de pivotement pour le mouvement de pivotement de la partie d'articulation avant (28) par rapport à la partie d'articulation arrière (26),
**caractérisé en ce que**
lorsqu'un mouvement d'articulation est effectué, la plage maximale de déviation de pivotement diminue à mesure que la déviation d'articulation augmente, en partant d'une position neutre d'articulation de la partie d'articulation avant (28) par rapport à la partie d'articulation arrière (26).

2. Articulation articulée/pivotante selon la revendication 1,
**caractérisée en ce que**, lors de l'exécution du mouvement d'articulation, la plage maximale de déviation de pivotement diminue de manière continue à mesure que la déviation d'articulation augmente, à partir de la position neutre d'articulation.

3. Articulation articulée/pivotante selon la revendication 1 ou 2,
**caractérisée en ce que**, dans le cas où la partie d'articulation avant (28) et la partie d'articulation arrière (26) sont positionnées l'une par rapport à l'autre dans la position neutre d'articulation, la première valeur maximale de déviation de pivotement et/ou la deuxième valeur maximale de déviation de pivotement à partir d'une position neutre d'articulation se situe dans la plage de 8° à 15°, de préférence autour de 11,7°, et/ou **en ce que**, dans le cas où la partie d'articulation avant (28) et la partie d'articulation arrière (26) sont positionnées dans la position neutre d'articulation l'une par rapport à l'autre, la plage de déviation maximale de pivotement se situe dans la gamme de 20° à 27°, de préférence autour de 23,4°.

4. Articulation articulée/pivotante selon l'une quelconque des revendications précédentes,
**caractérisé en ce que**, dans le cas où la partie d'articulation avant (28) et la partie d'articulation arrière (26) sont positionnées dans une déviation d'articulation de la partie d'articulation avant (28) par rapport à la partie d'articulation arrière (26) correspondant à un angle de braquage de 30°, la première déviation maximale de pivotement et/ou la deuxième déviation maximale de pivotement, partant d'une position de pivotement neutre de la partie d'articulation avant (28) par rapport à la partie d'articulation arrière (26), se situe dans la plage de 4° à 11°, de préférence à environ 7,6°, et/ou **en ce que** dans le cas où la partie d'articulation avant (28) et la partie d'articulation arrière (26) sont positionnées à une déviation d'articulation de la partie d'articulation avant (28) par rapport à la partie d'articulation arrière (26) correspondant à un angle de direction de 30°, la plage de déviation de pivotement maximale se situe dans une gamme de 12° à 19°, de préférence à environ 15,2°.

5. Articulation articulée/pivotante selon l'une quelconque des revendications précédentes,
**caractérisée en ce que** le mécanisme d'articulation (25) comprend :
- une pièce d'accouplement (30) raccordée de manière articulée au niveau d'une première unité d'articulation (32) à la pièce d'articulation arrière (26) et au niveau d'une deuxième unité d'articulation (34) à la partie d'articulation avant (28),
- un support d'articulation arrière (35) s'étendant de la partie d'articulation arrière (26) vers la partie d'articulation avant (28), un support d'articulation avant (36) s'étendant de la partie d'articulation avant (28) vers la partie d'articulation arrière (36) et une troisième unité d'articulation (38) couplant de manière articulée dans une direction de distance (A) de la partie d'articulation avant (28) par rapport à la partie d'articulation arrière (26) le support d'articulation arrière (35) entre la première unité d'articulation (32) et la deuxième unité d'articulation (34) et orthogonalement à la direction de distance (A) à une distance de la première unité d'articulation (32) et de la deuxième unité d'articulation (34) au support d'articulation avant (28),
de préférence dans lequel la première unité d'articulation (32) et/ou la deuxième unité d'articulation (34) et/ou la troisième unité d'articulation (38) est conçue à la manière d'une articulation à rotule.

6. Articulation articulée/pivotante selon l'une quelconque des revendications précédentes,
**caractérisée en ce que** le dispositif d'arrêt de pivotement (48) comprend :
- sur une partie d'articulation de la partie d'articulation avant (28) et de la partie d'articulation arrière (26) une première formation de butée de pivotement (50) s'étendant vers l'autre partie d'articulation de la partie d'articulation avant (28) et de la partie d'articulation arrière (26) avec deux surfaces de butée de pivotement (52, 54) orientées à l'opposé l'une de l'autre,
- sur l'autre partie d'articulation, une deuxième formation de butée de pivotement (68) s'étendant jusqu'à la première partie d'articulation et englobant la première formation de butée de pivotement (50) avec deux doigts de butée de pivotement (72, 74) à la manière d'une fourche,
dans lequel chaque doigt de butée de pivotement (72, 74) se trouve en face d'une des surfaces de butée de pivotement (52, 54) et fournit une butée de pivotement (86, 88) avec celle-ci.

7. Articulation articulée/pivotante selon la revendication 6,
**caractérisée en ce que** la première formation de butée de pivotement (50) présente une zone d'entretoise (56) s'étendant dans la direction opposée à une partie d'articulation et, dans une zone d'extrémité de la zone d'entretoise (56) opposée à une partie d'articulation, une zone de tête (58) élargie par rapport à la zone d'entretoise (56), dans lequel la distance entre les surfaces de butée de pivotement (52, 54) orientées à l'écart l'une de l'autre est au moins partiellement plus grande dans la région de tête (58) que dans la région d'entretoise (56),
de préférence dans laquelle au moins dans une partie de la région d'entretoise (56) la distance entre les surfaces de butée de pivotement (52, 54) orientées à l'écart l'une de l'autre est sensiblement constante ou change dans une direction longitudinale de la région d'entretoise à une vitesse sensiblement constante.

8. Articulation articulée/pivotante selon la revendication 7,
**caractérisée en ce que,** dans la zone de tête (58), la distance entre les surfaces de butée de pivotement (52, 54) orientées à l'opposé l'une de l'autre augmente depuis la zone d'entretoise (56) jusqu'à une distance maximale.

9. Articulation articulée/pivotante selon l'une quelconque des revendications 6 à 8,
**caractérisée en ce que** la distance mutuelle entre les doigts de butée de pivotement (72, 74) dans la direction opposée à l'autre partie d'articulation augmente dans une première zone d'extension (78, 80) des doigts de butée de pivotement (72, 74) et diminue dans une deuxième zone d'extension (82, 84) des doigts de butée de pivotement (72, 74) adjacente à la première zone d'extension (78, 80).

10. Articulation/pivot selon la revendication 6 et la revendication 9,
**caractérisée en ce que,** à partir de la position neutre d'articulation, lorsque la déviation d'articulation de la partie d'articulation avant (28) par rapport à la partie d'articulation arrière (26) augmente, chaque doigt de butée (72, 74) de la deuxième formation de butée (68) coopère avec cette surface de butée (52, 54) de la première formation de butée (50), dans une zone de la surface de butée associée (52, 54) plus proche d'une partie d'articulation, pour former une butée respective (86, 88), et/ou **en ce que**, à partir de la position neutre d'articulation, chaque doigt de butée de pivotement (72, 74) de la deuxième formation de butée de pivotement (68) coopère avec une zone du doigt de butée de pivotement (72, 74) respectif, plus proche de l'autre partie d'articulation, avec la surface de butée de pivotement (52, 54) associée de la première formation de butée de pivotement (50), en vue de la formation d'une butée de pivotement (86, 88) respective.

11. Articulation articulée/pivotante selon la revendication 9 et la revendication 10,
**caractérisée en ce que** dans la position neutre d'articulation, chaque doigt de butée de pivotement (72, 74) de la deuxième formation de butée de pivotement (68) coopère dans la zone de sa première zone d'extension (78, 80) avec la surface de butée de pivotement associée (52, 54) dans la zone de la zone de tête (58) de la première formation de butée de pivotement (50) pour fournir une butée de pivotement respective (86, 88), et/ou **en ce que**, lors d'une déviation d'articulation de la partie d'articulation avant (28) par rapport à la partie d'articulation arrière (26) correspondant à un angle de direction de 30°, chaque doigt de butée de pivotement (72, 74) de la deuxième formation de butée de pivotement (68) coopère, dans la zone de sa deuxième zone d'extension (82, 84), avec la surface de butée de pivotement associée (52, 54) dans la zone de la zone d'entretoise (56) de la première formation de butée de pivotement (50), pour former une butée de pivotement (86, 88).

12. Articulation articulée/pivotante selon l'une quelconque des revendications 6 à 10,
**caractérisée en ce que** ladite une partie d'articulation est la partie d'articulation avant (28) et ladite autre partie d'articulation est la partie d'articulation arrière (26).

13. Articulation articulée/pivotante selon la revendication 5 et l'une quelconque des revendications 6 à 12, si on se réfère à la revendication 5,
**caractérisée en ce que** la première formation de butée de pivotement (50) et la deuxième formation de butée de pivotement (68) sont disposées dans une direction orthogonale à la direction de distance (A) entre la première unité d'articulation (32) et la deuxième unité d'articulation (34) d'une part et la troisième unité d'articulation (38) d'autre part, et/ou **en ce que**, par rapport à une direction (H) orthogonale à la direction de distance (A), les surfaces de butée de pivotement (52, 54) de la première formation de butée de pivotement (50) sont orientées latéralement en s'éloignant les unes des autres et/ou les doigts de butée de pivotement (72, 74) de la deuxième formation de butée de pivotement (68) entourent la première formation de butée de pivotement (50) latéralement depuis l'extérieur.

14. Machine de construction, en particulier compacteur de sol, comprenant une partie arrière (12) et une partie avant (20) reliée à la partie arrière (12) par une articulation articulée/pivotant (24) selon l'une quelconque des revendications précédentes, dans lequel un poste de conduite (14) est de préférence prévu sur la partie arrière (12), le poste de conduite (14) recouvrant au moins partiellement l'articulation articulée/pivotante (24) dans une direction longitudinale (B) de la machine de construction.

15. Machine de construction selon la revendication 14,
**caractérisée en ce qu'**au moins un outil de travail, de préférence un rouleau compacteur (22), est prévu sur la section avant (20), et/ou **en ce qu'**un ensemble d'entraînement (16) est prévu sur la section arrière (12).
